# EUROPÄISCHE PATENTSCHRIFT

(11) **EP 1 564 069 B1**
(45) Veröffentlichungstag und Bekanntmachung des Hinweises auf die Patenterteilung: **02.01.2008**
(21) Anmeldenummer: 05100331.7
(22) Anmeldetag: 20.01.2005
(51) Int. Cl.: B60P 1/60

(54) **Fahrzeug für Container mit Beladungseinrichtung**
Vehicle for container with loading apparatus
Véhicule pour conteneur avec un dispositif de chargement

(30) Priorität: 10.02.2004 DE 102004006641
(43) Veröffentlichungstag der Anmeldung: 17.08.2005
(73) Patentinhaber: Karl Schmidt Spedition GmbH & Co., 74076 Heilbronn (DE)
(72) Erfinder: Schmidt, Horst, 74072 Heilbronn (DE)
(74) Vertreter: Patentanwalts-Partnerschaft Rotermund + Pfusch + Bernhard

(56) Entgegenhaltungen:
- DE-A1- 2 052 544
- GB-A- 795 738
- GB-A- 971 792
- GB-A- 2 310 843
- US-A- 4 082 195

## Beschreibung

Die Erfindung betrifft ein Fahrzeug für Container, insbesondere Heckbulk-Container nach dem Oberbegriff des Patentanspruchs 1.

Aus der DE 20 52 544 sind ein Verfahren und eine Vorrichtung zum Be- und Entladen von Containern mit Schüttgut, zum Beispiel mit pulverförmigen Produkten, bekannt. Die Vorrichtung umfasst eine außerhalb des Aufnahmebereichs eines Containers, insbesondere eines Großcontainers mit seitlich zu öffnenden Beladungstüren, eine Schüttgut-Beladungseinrichtung, welche eine auf ein nach unten entleerendes Schüttgutsilo ausrichtbare Aufnahmevorrichtung für aus dem Schüttgutsilo von oben herabfallendes Schüttgut besitzt. Darüber hinaus weist die Beladungseinrichtung eine Schüttgutauswurföffnung für einen etwa horizontalen Schüttgutauswurf auf, an welchen eine verschließbare Befüllöffnung eines sackförmigen Container-Inletts anschließbar ist.

Bei derartigen Fahrzeugen soll ein auf diesem befindlicher leerer Container in einer üblichen Schüttgut-Verladestation mit Schüttgut beladen werden können. Übliche Schüttgutverladestationen besitzen Schüttgutsilos mit nach unten entleerenden Öffnungen, aus denen Schüttgut in darunter stehende Tankfahrzeuge von oben in Ladeluken des Tankfahrzeuges herabfallen kann. Bei einem Fahrzeug mit einem geschlossenen Container, der lediglich seitliche Öffnungstüren besitzt, ist ein solches Beladen nicht möglich. Bei den Containern eines gattungsgemäßen Fahrzeuges handelt es sich um übliche Großcontainer, wie sie insbesondere auch in der Schifffahrt auf Containerschiffen verwendet werden. Hier übliche Container sind 20', 30' oder 40'-Container.

Bei den erwähnten Heckbulk-Containern handelt es sich um solche, deren Öffnungstüren heckseitig angebracht sind.

Um derartige Container, wenn sie sich auf einem Container-Fahrzeug befinden, in einer üblichen Schüttgut-Verladestation befüllen zu können, können an den Verladestationen Beladungseinrichtungen vorgesehen sein. In diesen Beladungseinrichtungen wird von oben aus einer Schüttgutsiloöffnung aufgefangenes Schüttgut horizontal umgelenkt und in den Container über eine spezielle Fördereinrichtung eingeworfen. Das Schüttgut wird dabei in ein sackförmiges, sogenanntes Inlett des Containers gefördert. Dieses sackförmige Inlett besitzt eine Zuführöffnung, die formschlüssig an die Förderöffnung der Beladungsöffnung angesetzt werden kann. Nach vollständigem Befüllen des Inletts wird dessen Beladungsöffnung von dem Förderer abgetrennt und verschlossen. Danach können die Türen des Containers bei vollständig innerhalb des Inletts gefülltem Container verschlossen werden.

Die vorstehend beschriebenen, bekannten Beladungseinrichtungen an Schüttgut-Verladestationen haben den Nachteil, dass sie jeweils an ein zu beladendes Container-Fahrzeug speziell herangefahren und angeschlossen werden müssen. Hierzu ist Personal der Verladestation erforderlich beziehungsweise in jedem Fall Bedienungspersonal. Darüber hinaus kann es vorkommen, dass in einer Verladestation mehr Containerfahrzeuge gleichzeitig beladen werden sollen als hierzu erforderliche Beladungseinrichtungen vorhanden sind. Dann entsteht für die Container-Fahrzeuge eine unnötige, Verlustkosten erzeugende Wartezeit. Ferner sind überhaupt nur ein Teil der vorhandenen Schüttgut-Verladestationen mit mobilen Spezial-Beladungseinrichtungen für Heckbulk-Container ausgerüstet.

Bei den anderen Verladestationen ist ein Befüllen von Heckbulk-Containern nicht möglich.

Die Erfindung beschäftigt sich mit dem Problem, ein gattungsgemäßes Fahrzeug zu schaffen, bei dessen Benutzung seitlich zu öffnende, geschlossene Container ohne Verwendung spezieller, in einer Schüttgut-Verladestation vorhandener Beladungseinrichtungen für Heckbulk-Container durch direkten Anschluss an untere Auslauföffnungen von Schüttgutsilos befüllt werden können.

Gelöst wird dieses Problem durch die Ausführung eines gattungsgemäßen Container-Fahrzeuges nach den kennzeichnenden Merkmalen des Patentanspruchs 1. Container-Fahrzeug im Sinne der vorliegenden Erfindung ist jedes bewegliche Fahrzeug, das zur Aufnahme gattungsgemäßer Container geeignet ist. Das Fahrzeug kann dabei insbesondere ein an ein Zugfahrzeug angeschlossener Sattelauflieger sein. Ganz allgemein ist erfindungsgemäß mit Container-Fahrzeug ein Standardcontainerchassis gemeint und zwar gleichgültig, in welcher Form es speziell ausgebildet ist, wenn damit nur Container in üblicher Weise auf insbesondere der Straße transportiert werden können.

Vorteilhafte und zweckmäßige Ausgestaltungen der Erfindung sind Gegenstand der Unteransprüche.

Die Erfindung beruht auf dem allgemeinen Gedanken, die zwischen einem Heckbulk-Container und einem unten auslaufenden Schüttgutsilo einer Verladestation erforderliche Beladungseinrichtung fahrzeugseitig vorzusehen und diese Einrichtung dabei derart zu gestalten, dass sie insbesondere bei einem Straßenfahrzeug abmessungsmäßig in zulässigen Grenzen liegt und ferner ein einfaches, möglichst automatisiertes Beladen ermöglicht. Das Einhalten für den Straßenverkehr zulässiger Abmessungen ist insbesondere bei einer Aufnahmefähigkeit eines erfindungsgemäßen Container-Fahrzeuges für 40'-Container wichtig. Zur Einhaltung dieser Forderung ist erfindungsgemäß eine Aufteilung der Ladungseinrichtung in einzelne, gegeneinander und gegenüber dem Grundkörper des Container-Fahrzeuges verlagerbare Bauelemente vorgesehen. Dabei ermöglicht die Verlagerbarkeit eine Verringerung der Außenabmessungen für den Ablagezustand gegenüber dem Arbeitszustand. Diese Verlagerungen können insbesondere vollautomatisch, beispielsweise durch hydraulische Betätigungselemente erreicht werden.

Darüber hinaus weist die Beladungseinrichtung ein Rahmenwerk und einen in diesem um eine Hochachse schwenkbar und höhenverschiebbar gelagerten Schüttgutförderer auf sowie eine in dem Rahmenwerk oben liegende Arbeitsbühne mit einer Aufstiegshilfe. Der Schüttgutförderer kann dabei zwischen einer Arbeits- und einer um 90° hierzu verschwenkten Transportlage um seine Hochachse verschwenkt werden. Dies ermöglicht es, den Schüttgutförderer im Transportzustand so zu lagern, dass er in Fahrzeuglängsrichtung im Vergleich zur Arbeitslage weniger Platz benötigt, so dass es insbesondere bei langen Containern möglich ist, innerhalb der zugelassenen Fahrzeuglängen verbleiben zu können.

Damit die Beladungseinrichtung an dem Containerfahrzeug autark, das heißt ohne Energiezufuhr von außen arbeiten kann, ist die Beladungseinrichtung mit Bezug auf eine Energieversorgung, die sie nicht von dem Fahrzeug erhalten kann, mit eigenständigen Energieversorgungseinrichtungen wie beispielsweise einem Drehstromgenerator versehen.

Um auf verschiedenen Container-Fahrzeugen je nach Bedarf eingesetzt werden zu können, ist die erfindungsgemäße Beladungseinrichtung mit dem Fahrzeug ausschließlich über Schnellverschlussmittel verbunden. Eingeschlossen in diese Schnellverschlussmittel sind Kupplungen für Energieversorgungsleitungen, die von dem Fahrzeug zu der Beladungseinrichtung führen.

Der Aufbau und die gegenseitige Verlagerbarkeit der einzelnen Bauelemente der Beladungseinrichtung sowie deren Verbindungselemente zu dem Fahrzeug werden nachfolgend noch näher anhand eines Beispieles beschrieben werden. Dabei wird auch im Einzelnen auf die Arbeitsschutzvorrichtungen eingegangen werden, mit denen die erfindungsgemäße Einrichtung in vorbildlicher Weise ausgerüstet ist.

Das erfindungsgemäße Fahrzeug ist mit einer Kamera ausgerüstet, mit der eine Einfüllposition der Beladungseinrichtung unterhalb der Auslauföffnung eines Schüttgutsilos detektiert werden kann.

Auch besitzt das erfindungsgemäße Fahrzeug eine Verwiegeeinrichtung, um Container vorgabegerecht passgenau befüllen zu können.

Auf einem erfindungsgemäßen Fahrzeug können Container unterschiedlicher Normgrößen transportiert werden. Erforderlich ist lediglich, dass die unterschiedlich großen Container jeweils mit ihrem Heck der Beladungseinrichtung in gleicher Weise, das heißt in einem gleich vorbestimmten Abstand zugeordnet werden. Da es hierdurch in Fahrzeuglängsrichtung zu einem Ungleichgewicht, das heißt einer zu hohen hinten liegenden Gewichtsbelastung kommen kann, ist bei dem Fahrzeug einrichtungsmäßig dafür gesorgt, dass bei einem kleinen, lediglich hinten liegenden Bereich des Fahrzeugs, auf dem ein Container aufliegt, im vorderen Fahrzeugbereich Ausgleichsgewichte angebracht werden können. Diese Ausgleichsgewichte können über Schnellverschlüsse leicht austauschbar angebracht werden.

Ein vorteilhaftes Ausführungsbeispiel ist im wesentlichen in schematischer Form in der Zeichnung dargestellt.

In dieser zeigen
- Fig. 1: eine Ansicht eines fahrbaren, mit einem Container beladenen Container-Chassis mit einer erfindungsgemäßen Beladungseinrichtung in Beladungsfunktion,
- Fig. 2: eine Draufsicht auf das Container-Chassis nach Fig. 1 mit einer Darstellung der Beladungseinrichtung in bereits teilweise einer Fahrposition,

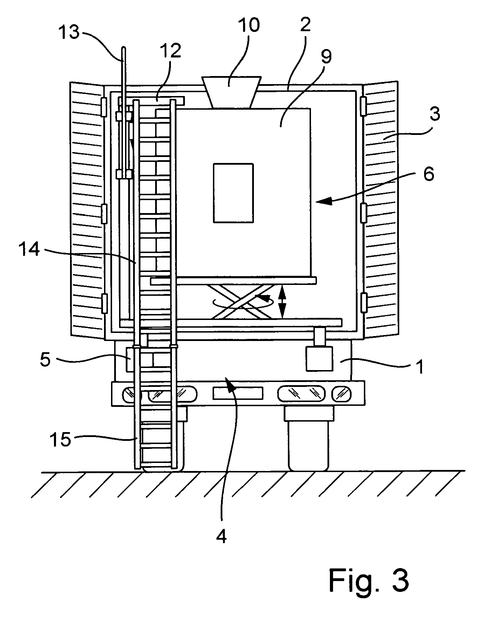

- Fig. 3: eine Rückansicht des Container-Chassis nach Fig. 1.

Auf einem Container-Chassis 1 als Fahrzeug befindet sich abnehmbar ein 40'-Heckbulk-Container 2. Der Heckbulk-Container 2 besitzt zu öffnende Hecktüren 3, die dem Heck des Container-Chassis 1 zugeordnet sind.

Das Container-Chassis 1 ist heckseitig mit einer in Fahrzeuglängsrichtung verschiebbaren Auszugeinrichtung 4 versehen. Diese Auszugeinrichtung 4 umfasst zwei in Fahrzeuglängsrichtung innerhalb des Container-Chassis 1 verschiebbar gelagerte Balken 5. Diese Balken 5 können hydraulisch gegenüber dem Container-Chassis 1 verschoben werden.

Über Schnellverschlussmittel mit dem Balken 5 der Aufzugseinrichtung 4 verbunden ist eine Schüttgut-Beladungseinrichtung 6.

Mit dieser Beladungseinrichtung 6 kann von einem sich in einer Schüttgut-Verladestation befindlichen Silo von oben herabfallendes Schüttgut in horizontaler Richtung des Containers 2 durch dessen von den Türen 3 geöffnete Heckseite in den Container eingeworfen werden.

Beladen wird das Innere des Containers 2 nicht direkt, sondern unter Zwischenschaltung eines sackartigen, das Containerinnere vollständig ausfüllenden Inletts 7, das in eingesetztem Zustand eine der Heckseite des Containers 2 zugeordnete, stutzenartige Befüllöffnung 8 besitzt.

Die Beladungseinrichtung 6 setzt sich im Einzelnen wie folgt zusammen.

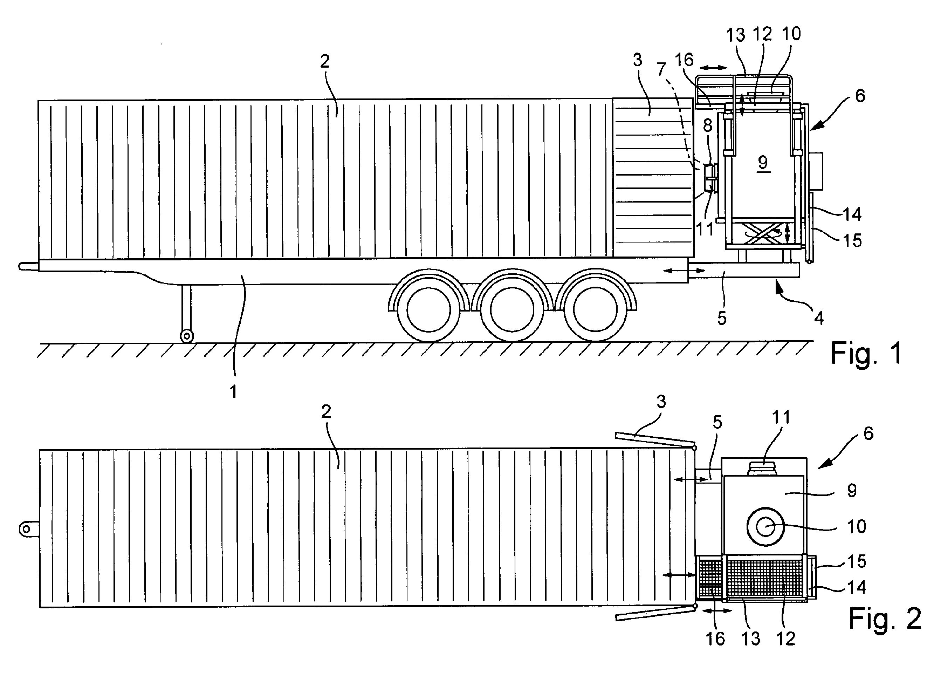

Obwohl eine Reihe der nachstehend beschriebenen Elemente der Beladungseinrichtung 6 beweglich und verschiebbar gelagert sind, bleibt dies bei der nachfolgenden Beschreibung des Aufbaus und der Zusammensetzung der Einrichtung, die sich an der Darstellung in der Fig. 1 orientiert, zunächst unberücksichtigt.

In einem Rahmenwerk der Beladungseinrichtung 6 befindet sich als zentrales Element ein Schüttgutförderer 9. Dieser Schüttgutförderer 9 besitzt oben einen Aufnahmetrichter 10 und an seiner dem Container 2 zugewandten Seite einen Horizontal-Austritt 11. An den Horizontal-Austritt 11 ist über nicht gezeichnete Schnellverschlussmittel die Befüllöffnung 8 des Container-Inletts 7 angeschlossen. Der Schüttgutförderer 9 ist ein Auswerfertyp, aus dem das Schüttgut mit regelbarer Auswurfkraft in das Inlett 7 eingetragen werden kann.

An dem Rahmenwerk der Beladungseinrichtung 6 ist oben eine Arbeitsbühne vorgesehen. Seitlich dieser Arbeitsbühne 12 befindet sich ein Sicherheitsgeländer 13. An der Heckseite des Rahmenwerks der Beladungseinrichtung befindet sich eine zu der Arbeitsbühne 12 führende Leiter 14. Der untere Teil der Leiter 14 ist klappbar gestaltet, so dass für den Fahrzustand des Container-Chassis 1 ein unterer Leiterbereich 15 hochklappbar ist.

Der Schüttgutförderer 9 ist um eine Hochachse um 90° schwenkbar und zwar zum Verschwenken zwischen einer Arbeits- und einer um 90° hierzu verschwenkten Transportlage. Die Arbeitslage zeigt Fig. 1, während Fig. 2 die Transportlage wiedergibt. Die Verschwenkbarkeit des Schüttgutförderers 9 ermöglicht es, diesen in einem Transportzustand so zu lagern, dass er in Fahrzeuglängsrichtung weniger Platz als in Arbeitsfunktions-Position benötigt. Hierdurch kann das Fahrzeug im Fahrzustand auf eine möglichst geringe Länge gebracht werden. Dies ist zur Aufnahme großer, das heißt langer Container erforderlich, um innerhalb zugelassener Fahrzeuglängen verbleiben zu können. Das Verschwenken um die Hochachse des Schüttgutförderers 9 kann hydraulisch erfolgen.

Der Schüttgutförderer 9 ist darüber hinaus auch höhenverschiebbar gelagert, um im Fahrzustand des Container-Chassis 1 innerhalb zulässiger Fahrzeughöhenabmessungen verbleiben zu können und andererseits beim Beladen ausreichend hoch an die Entleerungsöffnung des Schüttgutsilos einer Verladestation gebracht werden zu können. Zur Höhenverlagerung kann ein Hubscherenantrieb eingesetzt sein.

Zur Einhaltung der im Straßenverkehr zulässigen Fahrzeughöhen kann auch die Arbeitsbühne höhenverschiebbar in dem Rahmenwerk der Beladungseinrichtung gelagert sein. Zumindest sind die Sicherheitsgeländer 13 an der Arbeitsbühne 12 höhenverlagerbar, und zwar insbesondere pneumatisch innerhalb der Beladungseinrichtung 6 gelagert. Darüber hinaus kann die Arbeitsbühne 12 auch in Richtung eines aufgesetzten Containers 2 beim Beladen temporär vergrößert werden. Ein entsprechender Vergrößerungsbereich 16 ist in der Zeichnung dargestellt und mit einem Doppelpfeil bezüglich seiner Verschiebbarkeit markiert.

Nachfolgend wird beschrieben, wie bei einem Container-Chassis 1 eine Beladungseinrichtung, die sich zunächst in Fahrfunktion befindet, in eine Arbeits- beziehungsweise Beladungsfunktion verwandelt wird.

Nach Anfahren einer Ladeposition an einem Schüttgutsilo innerhalb einer Verladestation wird die Beladungseinrichtung 6 aus ihrem für den Straßenfahrbetrieb eingezogenen Ablagezustand in ihren Beladungszustand ausgefahren beziehungsweise eingerichtet.

Dabei wird die Auszugseinrichtung 4 über ihre Balken 5 aus dem Grundkörper des Container-Chassis 1 ausgefahren. Dieses Ausfahren erfolgt insbesondere bei einem Ablagezustand des Schüttgutförderers 9 innerhalb der Beladungseinrichtung 6. In der ausgefahrenen Position der Auszugseinrichtung 4 können die Hecktüren 3 des Heckbulk-Containers 2 geöffnet werden. In weiteren Schritten wird der Schüttgutförderer 9 in seine Arbeits-, das heißt Beladeposition, um 90° aus seiner Ablageposition geschwenkt. Des weiteren erfolgt eine Nachobenverlagerung des Schüttgutförderers 9 mittels eines Scherenhubtisches als hydraulisch angetriebener Hubeinrichtung in eine Aufnahmeposition gegenüber einer zugeordneten Schüttgutsilo-Auslassöffnung. Dabei erfolgt, falls einrichtungsmäßig vorgesehen, auch ein Nachobenfahren der Arbeitsbühne 12 auf eine der Oberseite des Containers 2 entsprechende Höhe. Zumindest erfolgt ein Herausfahren eines Sicherheitsgeländers 13 aus einer für den Fahrbetrieb eingezogenen Position in eine Arbeitsposition als Sicherheitsgeländer an der Arbeitsbühne 12. Um einen Überstieg von der Arbeitsbühne 12 auf die Containeroberseite zu ermöglichen, kann ein Vergrößerungsbereich 16 der Arbeitsbühne 12 aus einer eingezogenen Fahrposition horizontal herausgeschoben werden, um den Abstand zwischen Arbeitsbühne 12 und Oberseite des Containers 2 zu überbrücken. Die an der Beladungseinrichtung 6 vorhandene Leiter 14, mit der die Arbeitsbühne 12 vom Boden aus erreicht werden kann, wird in ihrem unteren Bereich 15 nach unten abgeklappt, damit ein bequemes und sicheres Besteigen möglich ist.

Das sackförmige Inlett 7 des Containers 2 wird mit seiner stutzenförmigen Befüllöffnung 8 mittels eines in der Zeichnung nicht dargestellten Schnellverschlusses an den Austritt 1 des Schüttgutförderers 9 angebunden.

Sind die vorstehend angegebenen Positionsveränderungen bei der Beladungseinrichtung 6 vorgenommen, kann das Befüllen des Containers 2 aus dem betreffenden Schüttgutsilo der Verladestation erfolgen. Dabei wird das Schüttgut durch den Schüttgutförderer 9 mit gesteuerter Auswurfkraft in das Innere des Inletts 7 ausgeworfen.

Die Verstellantriebe zum Verlagern der einzelnen Elemente der Beladungseinrichtung 6 sind vorteilhafterweise Hydraulikantriebe, die von dem Container-Chassis 1 aus betätigbar sind. Für den Betrieb des Schüttgutförderers 9, der elektromotorisch erfolgt, ist auf der Beladungseinrichtung 6 ein dort autark arbeitender - nicht dargestellter - Stromgenerator vorgesehen. Die aus Container-Chassis 1 und Beladungseinrichtung 7 bestehende Gesamteinrichtung besitzt eine Verwiegevorrichtung, mit der das insgesamt bei der Beladung aufgenommene Schüttgut sicher erfasst werden kann.

Die Beladungseinrichtung 6 ist zudem mit einer Kamera ausgerüstet, mit der ihre Position gegenüber einer Schüttgutsiloöffnung, der sie bei der Schüttgutbeladung zugeordnet werden soll, exakt ausgerichtet werden kann.

Mit einem erfindungsgemäß ausgestatteten Container-Fahrzeug ist es möglich, den betreffenden Container 2 unter Einsatz lediglich einer einzigen Bedienungsperson vorgabegenau und sicher zu beladen. Diese einzige Bedienungsperson kann der Fahrer des betreffenden Fahrzeuges sein, das heißt es ist kein Spezialpersonal und Spezialeinrichtungen der Schüttgutverladestation für den Beladebetrieb erforderlich.

Die Betätigung des Auslasses eines Schüttgutsilos sowie das Ausrichten einer von der Austrittsöffnung des Schüttgutsilos in den Aufnahmetrichter 10 des Schüttgutförderers führenden flexiblen Verbindungsleitung kann von der Arbeitsbühne 12 beziehungsweise der von dieser Arbeitsbühne 12 aus sicher erreichbaren Oberseite des Containers 2 erfolgen. Mit Hilfe der an der Beladungseinrichtung 6 vorgesehenen Leiter 14, 15, die bis auf den Boden abgeklappt werden kann, kann die Bedienungsperson die Arbeitsbühne sicher erreichen. Auch auf der Arbeitsbühne selbst ist die Bedienungsperson durch das dort ausfahrbare Sicherheitsgeländer 13 geschützt.

Die gesamte Beladungseinrichtung 6 ist über Schnellverschlussmittel mit dem Auszug 4 des Container-Chassis 1 verbunden, so dass sie sehr einfach von einem Container-Chassis auf ein anderes umgesetzt werden kann. So kann die Beladungseinrichtung auch dann weiter benutzt werden, wenn Wartungsarbeiten an dem Container-Chassis 1 durchzuführen sind.

Alle in der Beschreibung und in den nachfolgenden Ansprüchen dargestellten Merkmale können sowohl einzeln als auch in beliebiger Form miteinander erfindungswesentlich sein.

## Patentansprüche

1. Fahrzeug, insbesondere Straßenfahrzeug, mit einer Aufnahmemöglichkeit für geschlossene Groß-Container mit seitlich zu öffnenden Beladungstüren, insbesondere Heckbulk-Container, wobei
- außerhalb des Aufnahmebereiches für den Container (2) eine Schüttgut-Beladungseinrichtung (6) vorgesehen ist,
- die Beladungseinrichtung (6) eine auf ein nach unten entleerendes Schüttgutsilo ausrichtbare Aufnahmevorrichtung (10) für aus dem Schüttgutsilo von oben herabfallendes Schüttgut besitzt,
- die Beladungseinrichtung (6) ferner eine SchüttgutAuswurföffnung (11) für einen etwa horizontalen Schüttgut-Auswurf besitzt,
- an den Schüttgut-Auswurf (11) eine verschließbare Befüllöffnung (8) eines sackförmigen Container-Inletts (7) anschließbar ist,
**gekennzeichnet durch** die Merkmale,
- die Schüttgut-Beladungseinrichtung (6) ist lösbar fest mit dem Fahrzeug verbunden,
- die verschließbare Befüllöffnung (8) ist über Schnellverschlussmittel an den Schüttgut-Auswurf (11) anschließbar,
- die Beladungseinrichtung (6) weist auf,
- ein Rahmenwerk,
- einen in dem Rahmenwerk um eine Hochachse schwenkbar und höhenverschiebbar gelagerten Schüttgutförderer (9),
- eine in dem Rahmenwerk oben liegende Arbeitsbühne (12),
- eine Aufstiegshilfe (14, 15) zum Aufsteigen einer Bedienungsperson auf die Arbeitsbühne (12),
- die Arbeitsbühne (12) und/oder Teile von dieser sind vertikal verlagerbar und/oder horizontal verlager- und/oder erweiterbar.

2. Fahrzeug nach Anspruch 1,
**dadurch gekennzeichnet,**
**dass** die Aufstiegshilfe (14, 15) der Beladungseinrichtung (6) zumindest in dem unteren Bereich zwischen einer unteren Position und einer darüberliegenden oberen Position längenveränderbar ist.

3. Fahrzeug nach Anspruch 1 oder 2,
**dadurch gekennzeichnet,**
**dass** der Bereich des Container-Chassis (1), auf dem sich die Beladungseinrichtung (6) befindet, gegenüber dem Container-Aufnahmebereich des Container-Chassis verschiebbar gelagert ist.

4. Fahrzeug nach einem der vorhergehenden Ansprüche,
**dadurch gekennzeichnet,**
**dass** zur Höhenverschiebbarkeit des Schüttgutförderers (9) eine hydraulisch arbeitende Scherenhubeinrichtung eingesetzt ist.

5. Fahrzeug nach einem der vorhergehenden Ansprüche,
**dadurch gekennzeichnet,**
**dass** zwischen der Beladungseinrichtung (6) und dem Container-Chassis (1) bestehende Energieversorgungsleitungen über Schnellverschlusskupplungen trennbar ausgebildet sind.

6. Fahrzeug nach einem der vorhergehenden Ansprüche,
**dadurch gekennzeichnet,**
**dass** die Beladungseinrichtung (6) mit einem Stromgenerator zum Betrieb des Schüttgutförderers (9) ausgerüstet ist.

7. Fahrzeug nach einem der vorhergehenden Ansprüche,
**dadurch gekennzeichnet,**
**dass** die innerhalb der Beladungseinrichtung (6) vorzunehmenden Verlagerungen einzelner Bauelemente (9, 13, 16, 4) gegeneinander durch hydraulische und/oder pneumatische Stellantriebe erzeugt werden.

8. Fahrzeug nach einem der vorhergehenden Ansprüche,
**dadurch gekennzeichnet,**
**dass** innerhalb des Container-Chassis (1) oder der Beladungseinrichtung (6) eine Verwiege-Einrichtung zur Bestimmung der geladenen Schüttgutmenge vorgesehen ist.

9. Fahrzeug nach einem der vorhergehenden Ansprüche,
**dadurch gekennzeichnet,**
**dass** eine Kamera zur Ausrichtung der Beladungseinrichtung (6) gegenüber einer Schüttgutentnahmeöffnung eines Schüttgutsilos einer Schüttgutverladestation vorgesehen ist.

## Claims

1. A motor vehicle, in particular a road vehicle, with a receptacle option for closed large-scale containers with loading doors to be opened at the side, in particular rear-end bulk containers, wherein
- outside of the receptacle area for the container (2), a bulk loading device (6) is provided,
- a loading device (6) has a receptacle device (10), alignable with a bottom-emptying bulk goods silo for bulk goods dropping out of the bulk goods silo from above,
- the loading device (6) also has a bulk goods ejection opening (11) for an approximately horizontal bulk goods ejection,
- a closable filling opening (8) of a bag-shaped container inlet (7) is connectable to the bulk goods ejection opening (11),
**characterized by** the features
- the bulk goods loading device (6) is fixedly and detachably attached to the vehicle,
- the closable filling opening (8) is connectable to the bulk goods ejection opening (11) via a fast closure means,
- the loading device (6) has
- a framework,
- a bulk goods conveyor (9) that is mounted to be pivotable about a vertical axis and adjustable in height in the framework,
- a working platform (12) situated in the upper part of the framework,
- an ascent aid (14, 15) for an operating person to ascend onto the working platform (12),
- the working platform (12) and/or the parts thereof are vertically displaceable and/or horizontally displaceable and/or expandable.

2. The vehicle according to Claim 1,
**characterized in that**
the ascent aid (14, 15) of the loading device (6) is adjustable in length at least in the lower area between a lower position and an upper position above the former.

3. The vehicle according to Claim 1 or 2,
**characterized in that**
the area of the container chassis (1) on which the loading device (6) is situated is displaceably mounted with respect to the container receptacle area of the container chassis.

4. The vehicle according to any one of the preceding claims,
**characterized in that**
a hydraulically operating scissors jack device is used for the height adjustability of the bulk goods conveyor (9).

5. The vehicle according to any one of the preceding claims,
**characterized in that**
power supply lines provided between the loading device (6) and the container chassis (1) are designed to be separable via snap-closure couplings.

6. The vehicle according to any one of the preceding claims,
**characterized in that**
the loading device (6) is equipped with a power generator for operating the bulk goods conveyor (9).

7. The vehicle according to any one of the preceding claims,
**characterized in that**
displacement of individual components (9, 13, 16, 4) with respect to one another, which is to be performed within the loading device (6), is generated by hydraulic and/or pneumatic actuating drives.

8. The vehicle according to any one of the preceding claims,
**characterized in that**
a weighing device for determining the quantity of bulk goods loaded is provided within the container chassis (1) or the loading device (6).

9. The vehicle according to any one of the preceding claims,
**characterized in that**
a camera is provided for aligning the loading device (6) with respect to a bulk goods discharge opening of a bulk goods silo of a bulk goods loading station.

## Revendications

1. Véhicule, en particulier véhicule routier, comprenant une possibilité de logement pour des grands conteneurs fermés avec des portes de chargement à ouvrir sur le côté, en particulier des conteneurs pour chargement en vrac par l'arrière,
- un dispositif de chargement pour marchandises en vrac (6) étant prévu à l'extérieur de la zone de réception pour le conteneur (2),
- le dispositif de chargement (6) présentant un dispositif de logement (10) pouvant être orienté sur un silo pour marchandises en vrac se vidant vers le bas pour des marchandises en vrac descendant du silo par en haut,
- le dispositif de chargement (6) présentant également une ouverture d'éjection pour marchandises en vrac (11) pour une éjection de marchandises en vrac à peu près horizontale,
- une ouverture de remplissage (8) pouvant être fermée d'une garniture intérieure de conteneur (7) en forme de sac pouvant être raccordée à l'éjection pour marchandises en vrac (11),
**caractérisé par** les caractéristiques suivantes
- le dispositif de chargement de marchandises en vrac (6) est relié de manière solidaire au véhicule de façon amovible,
- l'ouverture de remplissage (8) pouvant être formée peut être raccordée par le biais de moyen de fermeture rapide à l'éjection pour marchandises en vrac (11),
- le dispositif de chargement (6) présente
- un bâti cadre,
- un convoyeur pour marchandises en vrac (9) logé dans le bâti cadre de façon basculante autour d'un axe vertical et réglable en hauteur,
- une plate-forme de travail (12) située en haut dans le bâti cadre,
- une aide de montée (14, 15) pour la remontée d'une personne de service sur la plate-forme de travail (12),
- la plate-forme de travail (12) et/ou des parties de cette plate-forme peuvent être déplacées verticalement et/ou déplacées et/ou étendues horizontalement.

2. Véhicule selon la revendication 1,
**caractérisé en ce que**
l'aide à la montée (14, 15) du dispositif de chargement (6) peut être modifiée en longueur au moins dans la zone inférieure entre une position inférieure et une position supérieure sus-jacente.

3. Véhicule selon la revendication 1 ou 2,
**caractérisé en ce que**
la zone du châssis de conteneur (1), sur laquelle se trouve le dispositif de chargement (6), est logée de façon coulissante en face de la zone de réception du châssis de conteneur.

4. Véhicule selon l'une quelconque des revendications précédentes,
**caractérisé en ce que**
un dispositif de levage à ciseaux travaillant de façon hydraulique est utilisé pour la possibilité de déplacement en hauteur du convoyeur de marchandises en vrac (9).

5. Véhicule selon l'une quelconque des revendications précédentes,
**caractérisé en ce que**
des lignes d'alimentation en énergie existant entre le dispositif de chargement (6) et le châssis de conteneur (1) sont réalisées de façon séparable au moyen de dispositifs d'accouplement à fermeture rapide.

6. Véhicule selon l'une quelconque des revendications précédentes,
**caractérisé en ce que**
le dispositif de chargement (6) est équipé d'un générateur de courant pour le fonctionnement du convoyeur de marchandises en vrac (9).

7. Véhicule selon l'une quelconque des revendications précédentes,
**caractérisé en ce que**
les déplacements, effectués à l'intérieur du dispositif de chargement (6), de composants (9, 13, 16, 4) individuels les uns par rapport aux autres sont générés par des servocommandes hydrauliques et/ou pneumatiques.

8. Véhicule selon l'une quelconque des revendications précédentes,
**caractérisé en ce que**
un dispositif de pesée pour la détermination de la quantité de chargement de marchandises en vrac est prévu à l'intérieur du châssis de conteneur (1) ou du dispositif de chargement (6).

9. Véhicule selon l'une quelconque des revendications précédentes,
**caractérisé en ce que**
une caméra est prévue pour l'orientation du dispositif de chargement (6) par rapport à une ouverture de prélèvement de marchandises en vrac d'un silo d'une station de chargement.
